# EUROPÄISCHE PATENTANMELDUNG

(11) **EP 3 929 114 A1**
(43) Veröffentlichungstag der Anmeldung: **29.12.2021**
(21) Anmeldenummer: 21163313.6
(22) Anmeldetag: 18.03.2021
(51) Int. Cl.: B65G 47/08, B65G 47/51, B65G 47/53, B65G 47/71, B65G 54/02, B65G 45/18, B65G 45/22, B65G 45/24

(54) **VERFAHREN UND VORRICHTUNG ZUM PUFFERN VON BEHÄLTERN**

(30) Priorität: 22.06.2020 DE 102020207680
(71) Anmelder: Krones AG, 93073 Neutraubling (DE)
(72) Erfinder: Demel, Alexander, 93073 Neutraubling (DE); Holzer, Christian, 93073 Neutraubling (DE); Lautenschlager, Franz, 93073 Neutraubling (DE); Richter, Christian, 93073 Neutraubling (DE); Muehlstein, Peter, 93073 Neutraubling (DE); Senn, Konrad, 93073 Neutraubling (DE); Kilgenstein, Torsten, 93073 Neutraubling (DE); Schuesslburner, Helmut, 93073 Neutraubling (DE)
(74) Vertreter: Grünecker Patent- und Rechtsanwälte PartG mbB

(57) **Zusammenfassung**

Beschrieben werden ein Verfahren und eine Vorrichtung zum Puffern einreihig gruppierter Behälter in einer Abfüllanlage. Hierzu werden die Behälter auf wenigstens einem Einlaufförderband in Einlaufrichtung eingespeichert, auf einer quer daran anschließenden Pufferfläche von schienengeführten und einzeln angetriebenen Shuttles mit Reihenschiebern in einer zur Einlaufrichtung quer verlaufenden Pufferrichtung einreihig verschoben und auf wenigstens einem in Pufferrichtung quer daran anschließenden Auslaufförderband ausgespeichert. Dadurch, dass die Reihenschieber die Behälter jeweils einreihig in einem von einer in Pufferrichtung vorauslaufenden vorderen Reihenführung und von einer nachlaufenden hinteren Reihenführung gebildeten / begrenzten Führungskanal aufnehmen, lassen sich die Behältergruppen ohne Staudruck, präzise, schnell und gegen Umfallen gesichert in Pufferrichtung verschieben und positionieren.

## Beschreibung

Die Erfindung betrifft ein Verfahren und eine Vorrichtung zum Puffern von Behältern in einer Behälterbehandlungsanlage, insbesondere Abfüllanlage, gemäß dem Oberbegriff des Anspruchs 1 bzw. 10.

Ein gattungsgemäßes Verfahren und eine gattungsgemäße Vorrichtung sind aus der DE 10 2018 211859 A1 bekannt. Demnach können einreihige Behältergruppen, beispielsweise bestehend aus Getränkeflaschen, mittels quer ausgerichteter Reihenschieber ohne Staudruck über eine Pufferfläche geschoben werden. Im Zusammenhang mit einem jeweils quer zur Pufferrichtung ausgerichteten Behältereinlauf und Behälterauslauf ergibt sich so eine Puffervorrichtung, die Behälterströme bei effizienter Platzausnutzung, beispielsweise nach dem First-in-first-out-Prinzip, puffern kann.

Als nachteilig hat sich jedoch insbesondere der Ablauf beim Einspeichern der Behältergruppen am Übergang vom Behältereinlauf zur Pufferfläche, also beim Übernehmen der Behältergruppen durch die Reihenschieber erwiesen. Beispielsweise wurde zur Optimierung des Einspeicherns vorgeschlagen, die Behältergruppen im Einlaufbereich quer entlang einer sägezahnförmiger Linie vor die sich annähernden Reihenschiebern zu fahren, um die Übernahme durch die Reihenschieber zu erleichtern. Dies ist vergleichsweise kompliziert und hinsichtlich der zu verarbeitenden Behälterformate unflexibel. Ferner sind nur vergleichsweise niedrige Vorschubgeschwindigkeiten der Reihenschieber beim Übernehmen der Behältergruppen und bei deren anschließendem Vorschieben in Pufferrichtung möglich, um ein Umfallen der Behälter zu vermeiden.

Es besteht daher Bedarf für dem gegenüber verbesserten Verfahren und Vorrichtungen zum Puffern einreihig gruppierter Behälter in einer Behälterbehandlungsanlage / Abfüllanlage.

Die gestellte Aufgabe wird mit dem Verfahren gemäß Anspruch 1 gelöst.

Das Verfahren dient zum Puffern einreihig gruppierter Behälter, insbesondere Flaschen, in einer Behälterbehandlungsanlage, insbesondere Abfüllanlage, insbesondere im Wesentlichen ohne gegenseitigen Staudruck der Behälter. Hierzu werden die Behälter auf wenigstens einem Einlaufförderband in Einlaufrichtung eingespeichert, auf einer quer daran anschließenden Pufferfläche von schienengeführten und einzeln angetriebenen Shuttles mit Reihenschiebern in einer zur Einlaufrichtung quer verlaufenden Pufferrichtung unter Beibehaltung einer räumlich voneinander getrennten einreihigen Anordnung, also in räumlich voneinander getrennten Pufferzeilen, einreihig verschoben und auf wenigstens einem in Pufferrichtung quer daran anschließenden Auslaufförderband ausgespeichert.

Erfindungsgemäß nehmen die Reihenschieber die Behälter jeweils einreihig in einem von einer in Pufferrichtung vorauslaufenden vorderen Reihenführung und von einer nachlaufenden hinteren Reihenführung gebildeten / begrenzten Führungskanal auf.

Der Führungskanal verläuft demnach quer zur Pufferrichtung. Somit lassen sich die Behälter/Behältergruppen ohne Staudruck, also in räumlich voneinander getrennten Pufferzeilen, vergleichsweise präzise in Pufferrichtung verschieben und positionieren.

Beim Beschleunigen und Verschieben in Pufferrichtung werden die Behälter / Behältergruppen von der hinteren Reihenführung geschoben und von der vorderen Reihenführung gegebenenfalls zusätzlich geführt und gegen Umfallen gesichert. Beim Abbremsen laufen die Behälter / Behältergruppen auf der vorderen Reihenführung auf und können von dieser schließlich angehalten sowie von der hinteren Reihenführung gegebenenfalls zusätzlich geführt und gegen Umfallen gesichert werden. Die Reihenschieber ermöglichen daher relativ hohe Geschwindigkeiten der Behälter / Behältergruppen beim Verschieben auf der Pufferfläche, auf dem Einlaufförderband und auf dem Auslaufförderband.

Die Behälter / einreihigen Behältergruppen können von den Shuttles je nach Befüllung der Pufferfläche prinzipiell an beliebigen Teilabschnitten der Pufferfläche angehalten werden. Eine Abfolge jeweils mit Behältern / Behältergruppen gefüllter Reihenschieber kann dann beispielsweise schrittweise zum / auf dem Auslaufförderband in Pufferrichtung nachrücken. Dort werden die Behälter / Behältergruppen aus den vordersten Reihenschiebern quer zur Pufferrichtung vom Auslaufförderband übernommen und je nach Vorschubposition der einzelnen Reihenschieber gegebenenfalls auf unterschiedliche Transportgassen verteilt.

Vorzugsweise wird eine lichte Weite des Führungskanals, also zwischen der vorderen und hinteren Reihenführung, jeweils an eine Breite / einen Durchmesser der Behälter insbesondere in einem Bereich von 40 bis 150 mm angepasst. Die Behälter / Behältergruppen können dann mit einem geeigneten Spiel zwischen der vorderen und hinteren Reihenführung schonend, präzise und gegen Umfallen gesichert in Pufferrichtung verschoben und positioniert werden.

Die Anpassung der lichten Weite begünstigt relativ hohe Beschleunigungen / Verzögerungen in Pufferrichtung von beispielsweise 0,2 bis 0,8 m/s².

Die lichte Weite wird vorzugsweise mittels eines an den einzelnen Shuttles vorhanden Stellmechanismus bei in Pufferrichtung ruhendem Shuttle eingestellt.

Zur maschinellen Einstellung eignet sich beispielsweise eine stationäre Einstellstation, an der die einzelnen Shuttles vorübergehend angehalten werden und der Einstellmechanismus betätigt wird. Die lichte Weite könnte mittels des Einstellmechanismus aber auch manuell eingestellt werden.

Vorzugsweise positionieren die Shuttles die Reihenschieber zum Aufnehmen der Behälter / Behältergruppen jeweils über einem zugeordneten Einlaufförderband, wobei die jeweilige Behältergruppe dann im Führungskanal zwischen vorderer und hinterer Reihenführung auf dem Einlaufförderband stehend in den Reihenschieber einläuft.

Anders gesagt, werden zum Aufnehmen der Behälter / Behältergruppen nur diese quer zur Pufferrichtung bewegt, während der zugeordnete Reihenschieber dabei vorübergehend im Wesentlichen ortsfest ist. Dies ermöglicht eine vergleichsweise platzsparende Übergabe einreihig gruppierter Behälter / der Behältergruppen vom Einlaufförderband an den jeweiligen Reihenschieber.

Die Pufferfläche ist vorzugsweise feststehend ausgebildet. Denkbar ist aber auch, dass zumindest ein Längsabschnitt der Pufferfläche in Pufferrichtung beweglich ist, beispielsweise in Form eines oder mehrerer in Pufferrichtung laufender und in die Pufferfläche integrierter Förderbänder.

Vorzugsweise laufen die Reihenschieber an den Shuttles paarweise und insbesondere entlang einer durchgehenden Schienenführung um. Die Shuttles umfassen dann einen in Pufferrichtung gesehen vorderen und einen hinteren Reihenschieber und somit einen vorderen und einen hinteren Führungskanal. Die Führungskanäle können eine gemeinsame Trennwand oder dergleichen Struktur aufweisen. Beispielsweise kann die vordere Reihenführung des hinteren Reihenschiebers / Führungskanals dann identisch oder fest verbunden mit der hinteren Reihenführung des vorderen Reihenschiebers / Führungskanals sein.

Dies reduziert die Anzahl der für eine bestimmte Pufferkapazität nötigen Shuttles und begünstigt eine besonders effektive Ausnutzung der Pufferfläche für ein druckloses Verschieben / Puffern der Behälter, also unter Einhaltung ihrer einreihigen Gruppierung.

Das Einstellen der lichten Weite lässt sich dann zudem vereinfachen, indem man lediglich den Abstand zwischen der vorderen Reihenführung des vorderen Reihenschiebers / Führungskanals und der hinteren Reihenführung des hinteren Reihenschiebers / Führungskanals verändert. Es ist dann beiden Reihenschiebern eines Shuttles ein gemeinsamer Stellmechanismus zugeordnet. Dies vereinfacht und verkürzt die Anpassung lichten Weite.

Die Reihenschieber laufen vorzugsweise kopfüber vom Auslaufförderband zum Einlaufförderband zurück. Das heißt, im Bereich des Einlaufförderbands, der Pufferfläche und des Auslaufförderbands, also beim Einspeichern, Verschieben und Ausspeichern der Behälter / Behältergruppen, sind die Reihenschieber / Führungskanäle nach unten hin offen, beim leeren Zurücklaufen der Shuttles vom Auslaufbereich zum Einlaufbereich dagegen nach oben hin offen.

Vorzugsweise werden den in Pufferrichtung jeweils vorderen Reihenschiebern / Führungskanälen ein in Pufferrichtung gesehen hinteres Einlaufförderband und den jeweils hinteren Reihenschiebern / Führungskanälen ein in Pufferrichtung gesehen vorderes Einlaufförderband fest zugeordnet. Das heißt, sämtliche vorderen Reihenschieber werden dann vom hinteren Einlaufförderband einreihig mit den Behältern / Behältergruppen bestückt, sämtliche hinteren Reihenschieber vom vorderen Einlaufförderband.

Um beide Reihenschieber eines Shuttles mit Behältern / Behältergruppen zu bestücken, wird dann zuerst der vordere Reihenschieber vom hinteren Einlaufband bestückt und danach der hintere Reihenschieber vom vorderen Einlaufförderband.

Das vordere und das hintere Einlaufförderband sind dann in Pufferrichtung vorzugsweise so weit voneinander entfernt, dass dazwischen wenigstens ein Shuttle mit Zwillings-Reihenschieber, also mit einem vorderem und einem hinteren Reihenschieber, positioniert werden kann. Dies dient einer Ablaufoptimierung für das einreihige Bestücken der Reihenschieber mit den Behältern / Behältergruppen.

Vorzugsweise wird ein einreihig und insbesondere lückenlos zugeführter Behälterstrom in die Behältergruppen unterteilt, und diese werden abwechselnd auf die insbesondere beiden in Pufferrichtung nacheinander angeordneten Einlaufförderbänder geleitet. Dies ermöglicht ein Bestücken der einzelnen Reihenschieber mit zeitlich lückenlos aneinander anschließenden Behältergruppen bei kontinuierlichem Behälterzustrom.

Vorzugsweise erreichen die Shuttles beim Anfahren der Einlaufbänder und/oder beim Überfahren leerer Bereiche der Pufferfläche eine Geschwindigkeit von wenigstens 0,4 m/s. Dies ermöglicht eine zügige Positionierung der Shuttles und Reihenschieber im Bereich der Einlaufbänder und ein zügiges Nachrücken der dort mit den Behältern / Behältergruppen bestückten Shuttles und Reihenschieber über leere Pufferfläche.

Beim gemeinsamen schrittweisen Nachrücken der Shuttles in gefüllten Bereichen der Pufferfläche bis zum Auslaufband erreichen die Shuttles vorzugsweise eine Geschwindigkeit von wenigstens 0,1 m/s.

Vorzugsweise werden die Behälter / Behältergruppen beim Ausspeichern auf drei bis zwölf parallel geschaltete Transportgassen verteilt, wobei die Anzahl der Auslaufförderbänder dann insbesondere der Anzahl der Transportgassen entspricht.

Das heißt, die Reihenschieber / Führungskanäle werden jeweils fluchtend mit einer der Transportgassen über dem zugeordneten Auslaufförderband positioniert und von diesem im intermittierenden Betrieb durch die jeweilige Transportgasse abtransportiert. Dies ermöglicht eine flexible Zuordnung der einreihig gruppierten Behälter beispielsweise zu einer stromabwärts angeordneten Verpackungsmaschine.

Vorzugsweise werden die Behälter ferner in einer im Bereich der Pufferfläche angeordneten Behandlungseinheit behandelt, und die dortige Aufenthaltsdauer der Behälter wird durch Antrieb, also gezieltes Verschieben und/oder Anhalten, der Shuttles mit den die Behälter dabei aufnehmenden Reihenschiebern eingestellt.

Dies ermöglicht eine unmittelbare Kopplung des Transfers der Behälter über die Prozessstrecke der Behandlungseinheit und ein dynamisches Puffern der Behälter zwischen Einspeichern und Ausspeichern der Behälter.

Das Puffern und die Behandlung der Behälter können so gemeinsam, zum Beispiel chargenweise, angepasst werden, um unmittelbar auf Änderungen der Produktivität einer übergeordneten Behälterbehandlungsanlage / Abfüllanlage zu reagieren.

Die beschriebene Vorrichtung eignet sich zum insbesondere staudrucklosen Puffern einreihig gruppierter Behälter, insbesondere Flaschen, in einer Abfüllanlage und umfasst eine Pufferfläche und ein darüber angeordnetes Transportsystem zum Verschieben der Behälter / Behältergruppen auf der Pufferfläche in einer Pufferrichtung von einem Einlaufbereich mit wenigstens einem quer zur Pufferrichtung verlaufenden Einlaufförderband in einen Auslaufbereich mit wenigstens einem quer zur Pufferrichtung verlaufenden Auslaufförderband, wobei das Transportsystem an Schienen geführte und unabhängig voneinander angetriebene Shuttles mit Reihenschiebern zum einreihigen Verschieben der Behälter umfasst.

Erfindungsgemäß umfassen die Reihenschieber jeweils einen quer zur Pufferrichtung verlaufenden Führungskanal zur einreihigen Aufnahme der Behälter, wobei der Führungskanal von einer den Behältern vorauslaufenden vorderen Reihenführung und einer den Behältern nachlaufenden hinteren Reihenführung begrenzt wird.

Die Reihenschieber sind somit zur in und entgegen der Pufferrichtung beidseitigen Führung der einreihig gruppierten Behälter in räumlich voneinander getrennten Pufferzeilen ausgebildet. Folglich lassen sich die bezüglich des Anspruchs 1 beschriebenen Vorteile erzielen.

Vorzugsweise umfassen die Shuttles Stellmechanismen zum Einstellen einer lichten Weite der Führungskanäle, also zwischen der jeweiligen vorderen und hinteren Reihenführung, insbesondere zum Einstellen einer lichten Weite von jeweils 40 bis 150 mm. Damit lassen sich die Reihenführungen / Führungskanäle an die Breite / den Durchmesser der zu puffernden Behälter anpassen.

Vorzugsweise umfasst das Transportsystem eine stationäre Einstellstation zur automatischen Betätigung der Stellmechanismen. Die Shuttles halten dann im Bereich der stationären Einstellstation vorübergehend einzeln an, sodass diese den jeweiligen Stellmechanismus zur Anpassung der lichten Weite betätigen kann. Prinzipiell könnte die Einstellstation auch zur manuellen Verstellung durch Bediener eingerichtet sein.

Vorzugsweise weisen die Reihenschieber / Führungskanäle eine Breite quer zur Pufferrichtung von 3 bis 6 m auf, insbesondere von 4 bis 5,5 m. Dies ermöglicht die Handhabung unterschiedlicher gefüllter Behälter, beispielsweise solcher für Getränke, insbesondere je nach Gewicht der einzelnen Behälter. Beispielsweise kann die von den Reihenschiebern jeweils einreihig aufgenommene Behältergruppe bei großvolumigen Behälterformaten kürzer sein als bei demgegenüber kleineren Behältern. Damit lässt sich die von den einzelnen Shuttles jeweils zu bewegende Masse an die Leistungsfähigkeit des Shuttleantriebs oder dergleichen Parameter anpassen.

Vorzugsweise umfasst jedes Shuttle zwei in Pufferrichtung hintereinander angeordnete Reihenschieber mit je einem Führungskanal im Sinne eines Zwillings-Reihenschiebers. Da die Antriebselemente und Führungselemente der Shuttles eine gewisse Mindestbreite der Shuttles bedingen, lässt sich die Pufferkapazität und/oder die Transportteilung der Behälter beim einreihigen Puffern durch eine Anordnung von je zwei Reihenschiebern pro Shuttle optimieren.

Zudem kann die lichte Weite der Führungskanäle dann für beide Reihenschieber der Shuttles durch einen gemeinsamen Stellmechanismus einfacher und schneller eingestellt werden als bei separater Verstellung einzelner Reihenschieber. Beispielsweise wird dann nur der Abstand zwischen der vorderen Reihenführung des vorderen Reihenschiebers / Führungskanals und der hinteren Reihenführung des hinteren Reihenschiebers / Führungskanals angepasst.

Vorzugsweise umfasst der Einlaufbereich mehrere, insbesondere zwei, in Pufferrichtung hintereinander angeordnete Einlaufförderbänder. Beispielsweise lässt sich dann ein in Pufferrichtung vorderes Einlaufförderband zur Bestückung aller hinteren Reihenschieber / Führungskanäle mit den einreihig einlaufenden Behältern / Behältergruppen verwenden und das hintere Einlaufförderband zur entsprechenden Bestückung sämtlicher vorderer Reihenschieber / Führungskanäle.

Der Abstand zwischen dem vorderen und dem hinteren Einlaufförderband ist dann vorzugsweise wenigstens so groß wie die Breite eines Zwillings-Reihenschiebers, also dessen Außenabmessung in Pufferrichtung gesehen, insbesondere bei der größtmöglichen lichten Weite der Führungskanäle. Es kann dann jeweils ein Shuttle in einer Zwischenposition zwischen über den Einlaufbändern positionierten Shuttles / Führungskanälen warten, um so den Ablauf beim Einspeichern optimieren zu können.

Prinzipiell wäre dies auch mit mehr als zwei Einlaufförderbändern und mehr als zwei Reihenschiebern pro Shuttle mit entsprechenden Abständen / Zwischenpositionen zwischen benachbarten Einlaufförderbändern.

Vorzugsweise umfasst der Auslaufbereich mehrere in Pufferrichtung hintereinander angeordnete und intermittierend angetriebene Auslaufförderbänder, die in Auslaufrichtung verlaufenden Transportgassen zugeordnet sind.

Vorzugsweise ist an wenigstens einem der Reihenschieber ein Reinigungselement zum Anblasen, Ansprühen, Abziehen und/oder Abbürsten der Pufferfläche angeordnet. Damit lässt sich die Pufferfläche im Arbeitsbetrieb in geeigneten Zeitabständen durch Überstreichen der Pufferfläche mit dem Reinigungselement reinigen.

Das Reinigungselement ist beispielsweise eine fest am Reihenschieber montierte Bürste und/oder Gummilippe, eine drehbare Bürste, eine Reihe von Düsen für wenigstens ein Reinigungsfluid oder dergleichen. Das Reinigungselement kann als passives Element lediglich durch die Relativbewegung des Reihenschiebers auf der Pufferfläche wirken oder als aktives Reinigungselement mit eigenem Antrieb ausgebildet sein.

Das Reinigungselement kann dauerhaft am Reihenschieber angebracht sein oder im Bedarfsfall vorübergehend am Reihenschieber angebracht werden.

Das Reinigungselement kann zudem mit einem Reinigungsfluid versorgt werden, das entweder zentral im Bereich des Transportsystems vorgehalten wird oder am zugeordneten Reihenschieber mitgeführt wird. Das Reinigungsfluid kann beispielsweise Wasser, ein schäumendes Reinigungsmittel, Trockeneisnebel, Druckluft, ein Sprühnebel oder dergleichen sein.

Das Reinigungselement könnte über einen eigenständigen Motor verfügen und/oder durch die Bewegung des Shuttles/Reihenschiebers beispielsweise mittels eines Reibrads angetrieben sein.

Es können auch unterschiedliche und/oder mehrere Reinigungselemente auf mehrere Reihenschieber verteilt werden. Beispielsweise kann von einem in Pufferrichtung vorauslaufenden Reihenschieber ein flüssiges Reinigungsfluid aufgesprüht oder anderweitig auf der Pufferfläche aufgetragen werden und diese von einem nachlaufenden Reihenschieber mittels Abblasen, Abziehen oder dergleichen abgewischt und/oder getrocknet werden.

Die Reinigung der Pufferfläche mittels der Reinigungselemente kann in regelmäßigen Intervallen erfolgen und/oder bedarfsorientiert und/oder während Produktionsunterbrechungen.

Die Pufferfläche könnte auf diese Weise auch nur abschnittsweise gereinigt werden, beispielsweise im/am Einlaufbereich und/oder im/am Auslaufbereich und/oder dazwischen.

Ferner kann das Transportsystem eine stationäre Reinigungsstation aufweisen, an der das Reinigungselement am zugeordneten Reihenschieber insbesondere maschinell angebracht und/oder ertüchtigt wird, beispielsweise durch Versorgung mit einem Reinigungsfluid. Das zugeordnete Shuttle könnte zu diesem Zweck vorübergehend an der Reinigungsstation angehalten werden, um die entsprechende Montage / Ertüchtigung des Reinigungselements vorzunehmen.

Durch derartige Anwendung des Reinigungselements und gegebenenfalls Reinigungsfluids können erhöhte Hygienebedingungen erfüllt werden, der manuelle Aufwand zur Reinigung der Pufferfläche reduziert werden, der Medienverbrauch für die Reinigung gegenüber manuellen Reinigungsschritten verringert werden und die Funktion der Vorrichtung insgesamt zuverlässig aufrechterhalten werden.

Vorzugsweise umfasst die Pufferfläche quer zur Pufferrichtung verlaufende, stationär angeordnete Mattenketten. Die Mattenketten umfassen jeweils quer zur Pufferrichtung an Gelenken aneinandergereihte Kettenglieder. Das heißt, die Gelenkachsen der einzelnen Gelenke sind im Wesentlichen in der Pufferrichtung PR ausgerichtet. Die Mattenketten dienen als stationäre Schiebfläche und sind daher im normalen Pufferbetrieb zum Verschieben der Behälter in Pufferrichtung nicht angetrieben.

Die Ausrichtung der Mattenketten quer zur Pufferrichtung bietet den Vorteil, dass die Behälter dann nicht über die Gelenke geschoben werden, sondern entlang der Gelenke verschoben werden. Somit kann ein unerwünschtes Aufschwingen der Behälter beim Verschieben und ein sogenannter Stick-Slip-Effekt vermieden werden.

Die Kettenglieder können Längenveränderungen, beispielsweise aufgrund von Temperaturschwankungen, im Pufferbetrieb ausgleichen. Neben geringen Reibwerten liegt darin ein wesentlicher Vorteil der Mattenketten gegenüber einer aus Platten gebildeten Pufferfläche.

Bevorzugte Ausführungsformen der Erfindung sind zeichnerisch dargestellt. Es zeigen:
Fig. 1 eine schematische Draufsicht auf die Vorrichtung;
Fig. 2 eine schematische seitliche Ansicht der Vorrichtung;
Fig. 3 eine seitliche Ansicht von Shuttles mit zwei Reihenschiebern;
Fig. 4 eine Draufsicht auf einen Stellmechanismus zum Verstellen der Reihenschieber;
Fig. 5 vorteilhafte Geschwindigkeitsprofile der Shuttles beim Umlauf am Transportsystem;
Fig. 6A bis 6E einen vorteilhaften Ablauf beim Einspeichern;
Fig. 7 eine schematische Darstellung eines alternativen Behälterzulaufs;
Fig. 8 eine schematische Darstellung einer bevorzugten Pufferfläche; und
Fig. 9 eine schematische Darstellung einer integrierten Behandlungseinheit.

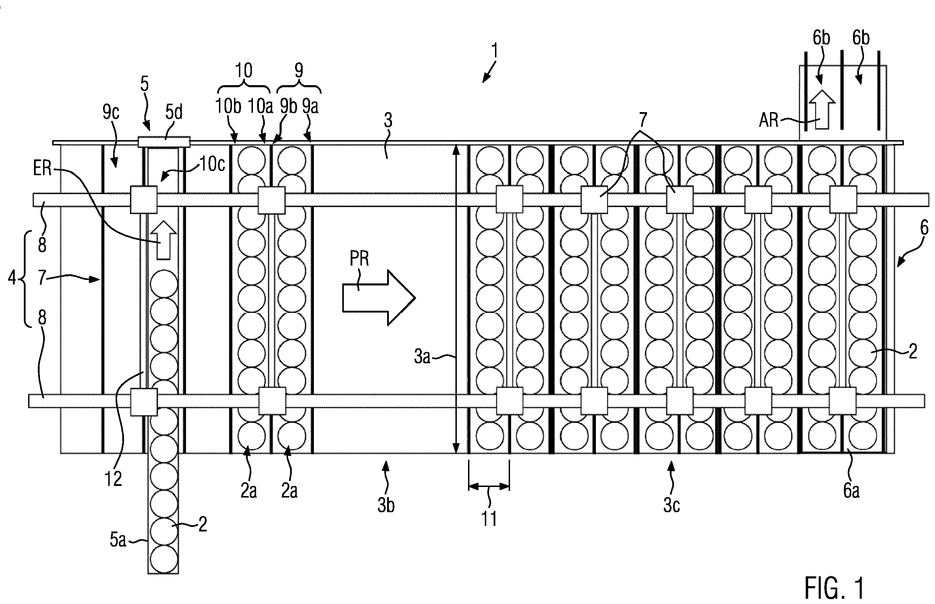

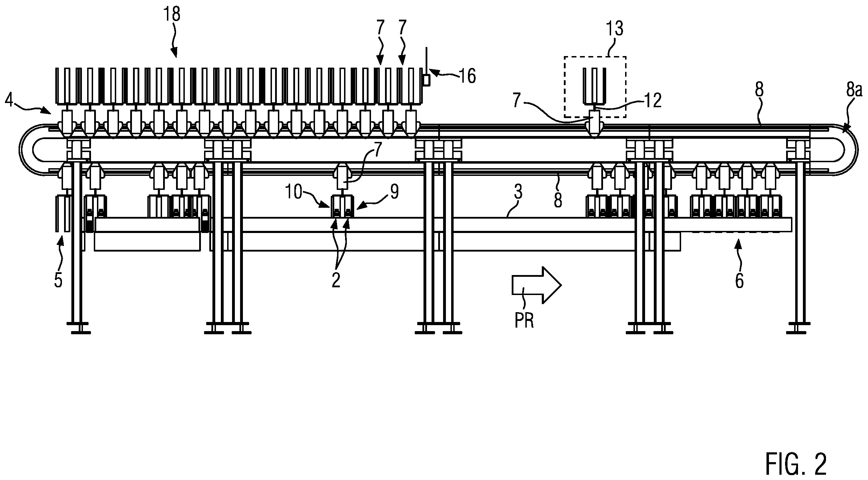

Wie die Fig. 1 und 2 erkennen lassen, umfasst die Vorrichtung 1 zum Puffern einreihig gruppierter Behälter 2 / Behältergruppen 2a eine im Wesentlichen horizontale und feststehende Pufferfläche 3 sowie ein darüber angeordnetes Transportsystem 4 zum Verschieben der Behälter 2 / Behältergruppen 2a auf der Pufferfläche 3 in einer Pufferrichtung PR von einem Einlaufbereich 5 mit wenigstens einem Einlaufförderband 5a in einen Auslaufbereich 6 mit wenigstens einem Auslaufförderband 6a.

Das wenigstens eine Einlaufförderband 5a verläuft in einer Einlaufrichtung ER und das Auslaufförderband 6a in einer Auslaufrichtung AR jeweils quer und insbesondere orthogonal zur Pufferrichtung PR des Transportsystems 4.

Das Transportsystem 4 umfasst unabhängig voneinander angetriebene Shuttles 7 und als geschlossene Umlaufbahn ausgebildete Schienen 8, an denen die Shuttles 7 entlanglaufen.

Die Shuttles 7 umfassen vorzugsweise wenigstens einen (in Pufferrichtung PR gesehen) vorderen Reihenschieber 9 und einen diesbezüglich hinteren Reihenschieber 10. Die Shuttles 7 könnten aber auch jeweils nur einen der Reihenschieber 9, 10 umfassen.

Die in Pufferrichtung PR hintereinander am Shuttle 7 angeordneten Reihenschieber 9, 10 können auch als Zwillings-Reihenschieber angesehen werden. Jeder Reihenschieber 9, 10 ist zur einreihigen Aufnahme der Behälter 2 / Behältergruppen 2a ausgebildet und quer, insbesondere orthogonal, zur Pufferrichtung PR ausgerichtet. Die Reihenschieber 9, 10 können somit auch als in Pufferrichtung PR bewegliche und räumlich voneinander getrennte Pufferzeilen für die einzelnen Behältergruppen 2a angesehen werden.

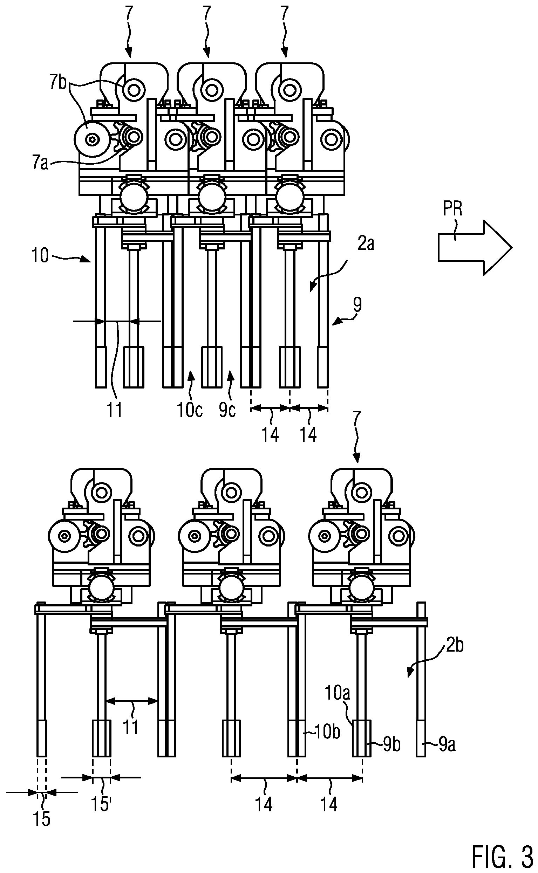

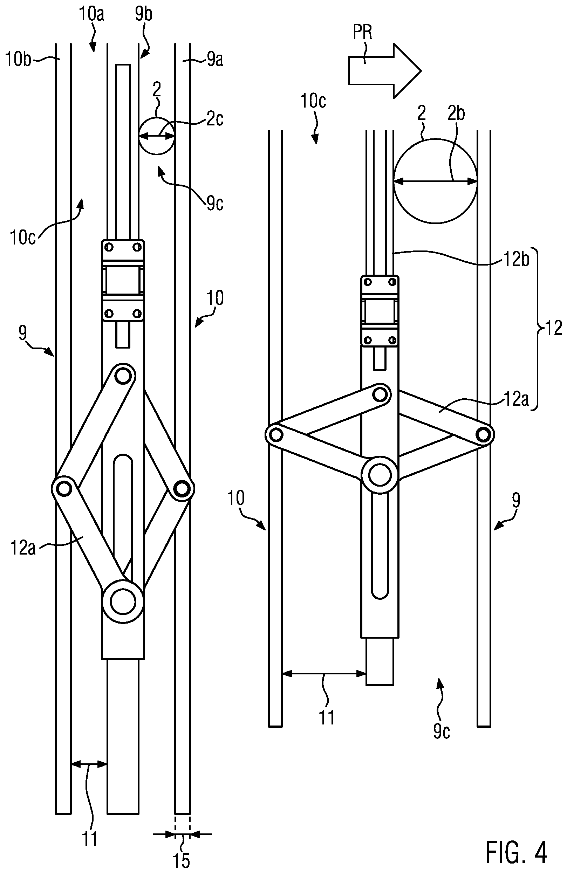

Wie beispielsweise die Fig. 3 und 4 im Detail erkennen lassen, sind die Reihenschieber 9, 10 zur jeweils vorauslaufenden und nachlaufenden Führung der einreihig gruppierten Behälter 2 und somit zu deren Führung sowohl in Pufferrichtung PR, also bei deren Vorschub in Pufferrichtung PR, beispielsweise bei Beschleunigung des Vorschubs, als auch entgegen der Pufferrichtung PR, insbesondere beim Abbremsen des Vorschubs, ausgebildet.

Bei den Behältern 2 handelt es sich beispielsweise um Flaschen.

Die Reihenschieber 9, 10 umfassen zu diesem Zweck jeweils eine den Behältern 2 vorauslaufende vordere Reihenführung 9a, 10a und eine den Behältern 2 nachlaufende hintere Reihenführung 9b, 10b sowie von diesen jeweils begrenzte Führungskanäle 9c, 10c zur Aufnahme und zweiseitigen Führung der Behälter 2 / einzelnen Behältergruppen 2a.

Die Reihenschieber 9, 10 bzw. deren Führungskanäle 9c, 10c weisen eine jeweils zwischen vorderer Reihenführung 9a, 10a und hinterer Reihenführung 9b, 10b definierte lichte Weite 11 auf, die vorzugsweise an die jeweilige Behälterbreite / den jeweiligen Behälterdurchmesser angepasst werden kann, was in der Fig. 4 für zwei unterschiedliche Durchmesser 2b, 2c der Behälter 2 beispielhaft dargestellt ist.

Die Shuttles 7 können jeweils einen in der Fig. 2 lediglich schematisch angedeuteten und in der Fig. 4 beispielhaft dargestellten Stellmechanismus 12 zum Einstellen der lichten Weite 11 umfassen, insbesondere gemeinsam für beide Führungskanäle 9c, 10c.

In der Fig. 2 ist schematisch ferner eine stationäre Einstellstation 13 angedeutet, in deren Bereich die Shuttles 7 zum Einstellen der lichten Weite 11 jeweils vorübergehend anhalten, sodass ein an der Einstellstation 13 vorhandener (nicht dargestellter) Aktuator auf geeignete Weise den Stellmechanismus 12 des jeweiligen Shuttles 7 maschinell betätigen kann, um die lichte Weite 11 beispielsweise automatisch einzustellen und so an das Format der zu puffernden Behälter 2 anzupassen.

Es wäre es aber auch denkbar, dass die Shuttles 7 nacheinander an der Einstellstation 13 anhalten und die lichte Weite 11 dort manuell über den Stellmechanismus 12 eingestellt wird.

Die Reihenschieber 9, 10 erstrecken sich vorzugsweise im Wesentlichen über die gesamte Breite 3a der Pufferfläche 3 und weisen vorzugsweise eine Breite (quer zur Pufferrichtung PR) von 3 bis 6 m auf, insbesondere von 4 bis 5,5 m.

Wie die Fig. 3 und 4 beispielhaft für einen minimalen Durchmesser 2a und einen maximalen Durchmesser 2b der Behälter 2 verdeutlichen, können die Shuttles 7 vorzugsweise so dicht aneinander gefahren und dann synchron in Pufferrichtung PR bewegt werden, dass die Führungskanäle 9c, 10c mehrerer Shuttles 7 im gleichmäßigen Abstand einer minimalen Transportteilung 14 zueinander auf der Pufferfläche 3 zum Auslaufbereich 6 nachrücken.

Wie insbesondere die Fig. 4 erkennen lässt, wird die jeweils minimale Transportteilung 14 im Wesentlichen von der eingestellten lichten Weite 11 und der Dicke 15 (Abmessung in Pufferrichtung PR) der Reihenführungen 9a, 9b, 10a, 10b bestimmt.

Die hintere Reihenführung 9b des vorderen Reihenschiebers 9 und die vordere Reihenführung 10a des hinteren Reihenschiebers 10 können im Sinne einer Zwillings-Reihenführung fest miteinander verbunden oder als gemeinsame Struktur ausgebildet sein mit dann doppelter Dicke 15' bezogen auf die Einzel-Reihenführungen 9a, 10b.

Die Fig. 4 zeigt eine bevorzugte Ausführungsform des Stellmechanismus 12 zum gleichzeitigen Verstellen der lichten Weite 11 an einem Shuttle 7 mit einem Zwillings-Reihenschieber bestehend aus dem vorderen Reihenschieber 9 und dem hinteren Reihenschieber 10 mit ihren Führungskanälen 9c, 10c.

Demnach umfasst der Stellmechanismus 12 vorzugsweise einen Scherenmechanismus 12a und eine Betätigungsstange 12b oder dergleichen, die beispielsweise linear in einer zugehörigen Führung (nicht dargestellt) verschoben werden kann und/oder an einen Spindeltrieb gekoppelt sein kann. Das Shuttle 7 wird zum Verstellen der lichten Weite 11 im Bereich der stationären Einstellstation 13 so positioniert, dass die Stellstange 12b dort auf prinzipiell bekannte Weise maschinell oder auch manuell betätigt werden kann.

Wie die Fig. 4 diesbezüglich erkennen lässt, wird die lichte Weite 11 vorzugsweise verstellt, indem der Abstand zwischen der vorderen Reihenführung 9a des vorderen Führungskanals 9c und der hinteren Reihenführung 10b des hinteren Führungskanals 10c mittels des Scherenmechanismus 12a verändert wird, während die hintere Reihenführung 9b des vorderen Führungskanals 9c und die vordere Reihenführung 10a des hinteren Führungskanals 10c fest aneinandergekoppelt und/oder als kombinierte Baugruppe ausgebildet sein können und dann vorzugsweise die Lagerung des Scherenmechanismus 12a und der Betätigungsstange 12b aufnehmen.

Die einzelnen Reihenführungen 9a, 9b, 10a, 10b haben vorzugsweise dieselbe Dicke 15 (in Pufferrichtung PR gesehen). Sind die am Shuttle 7 jeweils mittig angeordneten Reihenführungen 9b, 10a zusammengefasst, so weist die daraus resultierende Mittelführung entsprechend die doppelte Dicke 15' auf. Ferner können die Shuttles 7 vorzugsweise lückenlos aneinander gefahren werden, sodass sich daraus die von der eingestellten lichten Weite 11 abhängige minimale Transportteilung 14 für die Behälter / Behältergruppen 2a ergibt, und zwar aus der Addition der lichten Weite 11 und dem doppelten Wert der Dicke 15 einzelner Reihenführungen 9a, 9b, 10a, 10b.

Mit dem Stellmechanismus 12 kann die lichte Weite 11 und damit auch die jeweils kleinstmögliche Transportteilung 14 auf einfache Weise für die einzelnen Shuttles 7 nacheinander an der Einstellstation 13 eingestellt werden.

Die Shuttles 7 sind dabei vorzugsweise so ausgebildet, dass sie so dicht aneinander gefahren werden können, dass sich die kleinstmögliche Transportteilung 14 bei im Wesentlichen lückenlos aneinander anschließenden Reihenschiebern 9, 10 benachbarter Shuttles 7 bei der kleinstmöglichen lichten Weite 11 ergibt.

In der Fig. 2 ist ferner schematisch angedeutet, dass an wenigstens einem der Reihenschieber 9, 10 ein Reinigungselement 16 dauerhaft angeordnet sein und/oder vorübergehend montiert werden kann, das beispielsweise zum Anblasen, Ansprühen, Abziehen und/oder Abbürsten der Pufferfläche 3, gegebenenfalls einschließlich des Einlaufbereichs 5 und/oder des Auslaufbereichs 6, ausgebildet ist.

Das Reinigungselement 16 könnte beispielsweise eine am Reihenschieber 9, 10 feststehende Bürste, eine rotierende Bürstenwalze, eine Düsenreihe für ein Reinigungsfluid, eine Abziehlippe oder dergleichen sein.

Die Shuttles 7 sind jeweils unabhängig voneinander angetrieben. Zu diesem Zweck können die Shuttles 7 beispielsweise über einen Linearmotorantrieb (jeweils nicht dargestellt) angetrieben werden, sodass die einzelnen Shuttles 7 mit unterschiedlichen Geschwindigkeiten und unabhängig voneinander angetrieben werden können.

Prinzipiell könnten die Shuttles 7 aber auch wahlweise an verschiedenen Transportketten einzeln und unabhängig voneinander eingekuppelt werden (nicht dargestellt). Einzelne Transportketten könnten dann mit unterschiedlicher Geschwindigkeit laufen und/oder entweder kontinuierlich oder mit bestimmten zeitlichen Abläufen getaktet angetrieben sein.

Somit können die einzelnen Shuttles 7 an prinzipiell beliebige Stellen der von den Schienen 8 definierten Umlaufbahn bewegt und dort positioniert werden und hierfür unabhängig voneinander beschleunigt und abgebremst werden. Zum einen können Abstände zwischen einzelnen Shuttles 7 verändert werden, beispielsweise zum Überfahren leerer Bereiche der Pufferfläche 3, zum anderen kann eine Abfolge mehrerer Shuttles 7 mit konstantem Abstand zueinander bewegt werden, beispielsweise beim Nachrücken der Shuttles 7 in einem gefüllten Bereich der Pufferfläche 3 zum Auslaufbereich 6 hin.

Die Shuttles 7 sind beispielsweise als Läufer von Linearmotoren ausgebildet, deren aktive Komponenten vorzugsweise an den Schienen 8 angeordnet sind, und dann beispielsweise mit zugehörigen Permanentmagneten ausgestattet. Diese bilden mit Langstatoren bekanntermaßen individuelle Antriebe für die einzelnen Shuttles 7 aus.

Gemäß Fig. 3 sind aber auch andere Antriebe denkbar, beispielsweise an den Shuttles 7 ausgebildete Servomotoren (nicht dargestellt) mit Antriebsritzeln 7a, die an einem entlang der Schienen 8 ausgebildeten Zahnkranz (nicht dargestellt) entlanglaufen können. Die Shuttles 7 umfassen dann ferner mit den Schienen 8 zusammenwirkende Führungsrollen 7b.

Zu diesem Zweck kann Antriebsenergie beispielsweise berührungslos, also ohne Schleifleitungen, an die Servomotoren oder dergleichen Antriebe der Shuttles 7 übertragen werden.

Die Shuttles 7 können zudem Energiespeicher für ihre individuellen Antriebe aufweisen, wie beispielsweise Leistungskondensatoren, Batterien oder dergleichen. Dadurch lassen sich Spitzen der Leistungsaufnahme beispielsweise beim Beschleunigen der Shuttles 7 kompensieren oder eine Energieversorgung in Abschnitten der Schienen 8 aufrechterhalten, in denen keine permanente Energieeinspeisung aus einer stationären Energiequelle möglich ist.

Zur Steuerung der einzelnen Shuttles 7 ist beispielsweise eine Datenübertragung mittels Leck-Wellenleiter und/oder funkgestützt möglich, beispielsweise über WLAN.

Derartige Antriebskonzepte und Steuerungskonzepte sind prinzipiell bekannt und daher nicht weiter im Detail erläutert.

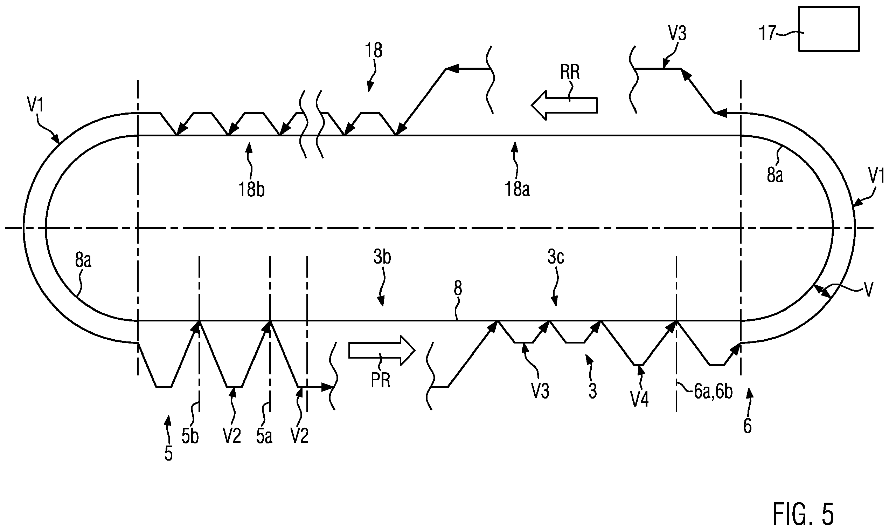

Die Fig. 5 verdeutlicht schematisch bevorzugte Geschwindigkeitsprofile der (in der Fig. 5 der Übersichtlichkeit halber nicht dargestellten) Shuttles 7 beim Umlauf an den Schienen 8. Die Vorschubgeschwindigkeit V der Shuttles 7 ist schematisch als orthogonaler Kurvenabstand von der jeweiligen Bewegungsrichtung der Shuttles 7 entlang der Schienen 8 dargestellt.

Zur entsprechenden Antriebssteuerung kann die Vorrichtung 1 eine zentrale Steuereinheit 17 für die einzelnen Shuttles 7 umfassen. Auch dezentrale Steuerungskonzepte wären hierfür denkbar.

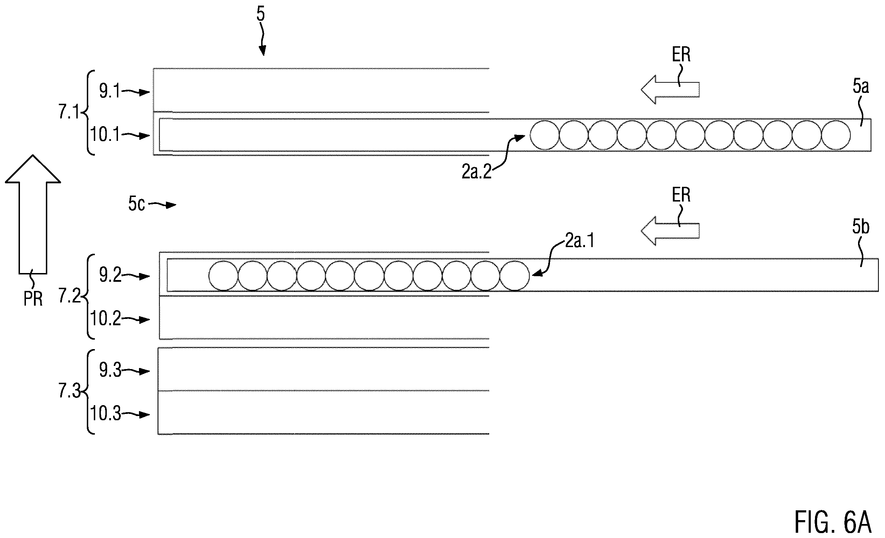

Demnach rücken wartende leere Shuttles 7 beispielsweise mit einer ersten Geschwindigkeit V1 zum Einlaufbereich 5 nach, werden dort bis auf eine Geschwindigkeit V2 beschleunigt und so abgebremst, dass sie zunächst über einem (in Pufferrichtung PR gesehen) hinteren Einlaufförderband 5b stillstehen. Dort werden die jeweils vorderen Reihenschieber 9 mit den Behältern 2 einreihig bestückt, wie beispielsweise in den Fig. 6A bis 6E dargestellt ist.

Zum nachfolgenden Anfahren eines (in Pufferrichtung PR gesehen) vorderen Einlaufförderbands 5a werden die Shuttles 7 wiederum auf die zweite Geschwindigkeit V2 beschleunigt und dann wieder bis zum Stillstand abgebremst. Vom vorderen Einlaufförderband 5a werden die hinteren Reihenschieber 10 mit den Behältern 2 einreihig bestückt, wie ebenso in den Fig. 6A bis 6E dargestellt ist.

Die zweite Geschwindigkeit V2 ist vorzugsweise größer als die erste Geschwindigkeit V1, wodurch das Einspeichern beschleunigt und gegebenenfalls an die Fördergeschwindigkeit des zulaufenden Behälterstroms angepasst werden kann.

Hierbei gewährleisten die zweiseitig, nämlich vorauslaufend und nachlaufend führenden Reihenschieber 9, 10, dass von diesen aufgenommene Behälter 2 / Behältergruppen 2a sowohl beim Beschleunigen als auch beim Abbremsen der Shuttles 7 präzise und weitgehend gegen Umfallen gesichert in Pufferrichtung PR mitgenommen und positioniert werden können.

Beim anschließenden Überfahren eines leeren Pufferbereichs 3b der Pufferfläche 3 werden die Shuttles 7 vorzugsweise wieder auf die zweite Geschwindigkeit V2 beschleunigt und mit dieser bis an einen mit Shuttles 7 besetzten Pufferbereich 3c der Pufferfläche 3 herangefahren und zum Anschluss an dort bereits positionierte bestückte Shuttles 7 abgebremst.

Im besetzten Pufferbereich 3c rücken die Shuttles 7 vorzugsweise unter Einhaltung der Transportteilung 14 der Behälter 2 / Behältergruppen 2a mit einer dritten Geschwindigkeit V3 zum Auslaufbereich 6 hin insbesondere schrittweise nach.

Die dritte Geschwindigkeit V3 im besetzten Pufferbereich 3c kann kleiner sein als die erste Geschwindigkeit V1 im Einlaufbereich 5 und die zweite Geschwindigkeit V2 im leeren Pufferbereich 3b.

Zum Ausspeichern werden die Shuttles 7 beispielsweise auf eine vierte Geschwindigkeit V4 beschleunigt und dann bis zum Stillstand über dem zugeordneten Auslaufförderband 6a abgebremst. Das Auslaufförderband 6a steht dabei vorzugsweise still.

Dadurch können die Reihenschieber 9, 10 mit jeweils zugeordneten Transportgassen 6b fluchtend positioniert werden. Beispielsweise können die Behälter 2 / Behältergruppen 2a aus den Führungskanälen 9c, 10c der Reihenschieber 9, 10 durch Start-Stopp-Steuerung des wenigstens einen Auslaufförderbands 6a gezielt quer zur Pufferrichtung PR auslaufen und so einzelnen der nebeneinander angeordneten Transportgassen 6b zugeordnet werden. Vorzugsweise ist jeder Transportgasse 6b ein separat steuerbares / angetriebenes Auslaufförderband 6a zugeordnet.

Die vierte Geschwindigkeit V4 im Auslaufbereich 6 kann beispielsweise größer als die dritte Geschwindigkeit V3 und kleiner als die zweite Geschwindigkeit V2 sein.

Die entleerten Shuttles 7 können beispielsweise mit der vierten Geschwindigkeit V4 bis an das Ende des Auslaufbereichs 6 gefahren werden und dort auf die erste Geschwindigkeit V1 abgebremst werden, um die Shuttles schließlich entlang eines vorzugsweise als Klothoid ausgebildeten Kurvensegments 8a der Schienen 8 nach oben in einen Leershuttle-Puffer 18 für wartende leere Shuttles 7 zu fahren.

Den Leershuttle-Puffer 18 durchlaufen die Shuttles 7 in einer der Pufferrichtung PR entgegengesetzten Rückführrichtung RR und vorzugsweise kopfüber bezüglich ihrer Ausrichtung auf der Pufferfläche 3.

Der Leershuttle-Puffer 18 umfasst in der Regel einen aufnahmefähigen, also nicht mit leeren Shuttles 7 besetzten Pufferbereich 18a und einen mit leeren Shuttles 7 besetzten Pufferbereich 18b. Der unbesetzte Pufferbereich 18a kann beispielsweise mit der zweiten Geschwindigkeit V2 durchfahren werden. Zum Nachrücken im besetzten Pufferbereich 18b können die leeren Shuttles 7 wiederum schrittweise auf die dritte Geschwindigkeit V3 beschleunigt und bis zum Stillstand abgebremst werden.

Die voraus- und nachlaufend führenden Reihenschieber 9, 10 ermöglichen vergleichsweise hohe Geschwindigkeiten der bestückten Shuttles 7 bei exakter Positionierung der Behälter 2 / Behältergruppen 2a in und entgegen der Pufferrichtung PR in den Führungskanälen 9c, 10c unter Vermeidung eines Umfallens einzelner Behälter 2 / der Behältergruppen 2a sowohl beim Beschleunigen als auch beim Abbremsen der Shuttles 7.

Zudem begünstigen die Führungskanäle 9c, 10c ein präzises Ein- und Ausspeichern quer zur Pufferrichtung PR, beispielsweise auf dem wenigsten einen Auslaufförderband 6a bei der Verteilung der Behälter 2 / Behältergruppen 2a auf unterschiedliche Transportgassen 6b.

Ein bevorzugter Ablauf des Verfahrens beim Einspeichern der einreihig gruppierten Behälter 2 in die Vorrichtung 1 ist in den Fig. 6A bis 6E anhand von fünf beispielhaft angedeuteten Shuttles 7.1 bis 7.5 und zwei in Pufferrichtung PR hintereinander angeordneten Einlaufförderbändern 5a, 5b schematisch angedeutet. Zwischen den Einlaufförderbändern 5a, 5b ist vorzugsweise eine Lücke / Zwischenposition 5c zum Parken einzelner Shuttles 7 vorhanden.

Demnach bewegen sich die Shuttles 7.1 bis 7.5 mit ihren vorderen Reihenschiebern 9.1 bis 9.5 und ihren hinteren Reihenschiebern 10.1 bis 10.5 schrittweise in der Pufferrichtung PR zuerst über das diesbezüglich hintere Einlaufförderband 5b und dann über das diesbezüglich vordere Einlaufförderband 5a.

Gemäß der Fig. 6A ist der hintere Reihenschieber 10.1 eines vordersten ersten Shuttles 7.1 zu Beginn des dargestellten Ablaufs über dem vorderen Einlaufförderband 5a stillstehend positioniert. Ferner ist der vordere Reihenschieber 9.2 eines nachfolgenden zweiten Shuttles 7.2 gleichzeitig stillstehend über dem hinteren Einlaufförderband 5b positioniert.

In dieser Anordnung läuft eine einreihige erste Behältergruppe 2a.1 auf dem hinteren Einlaufförderband 5b zuerst quer zur Pufferrichtung PR ein, eine im Produktstrom zeitlich lückenlos anschließende zweite Behältergruppe 2a.2 auf dem vorderen Einlaufförderband 5a.

Dargestellt ist in der Fig. 6A ferner ein nachfolgendes drittes Shuttle 7.3 mit seinen noch unbestückten Reihenschiebern 9.3 und 10.3.

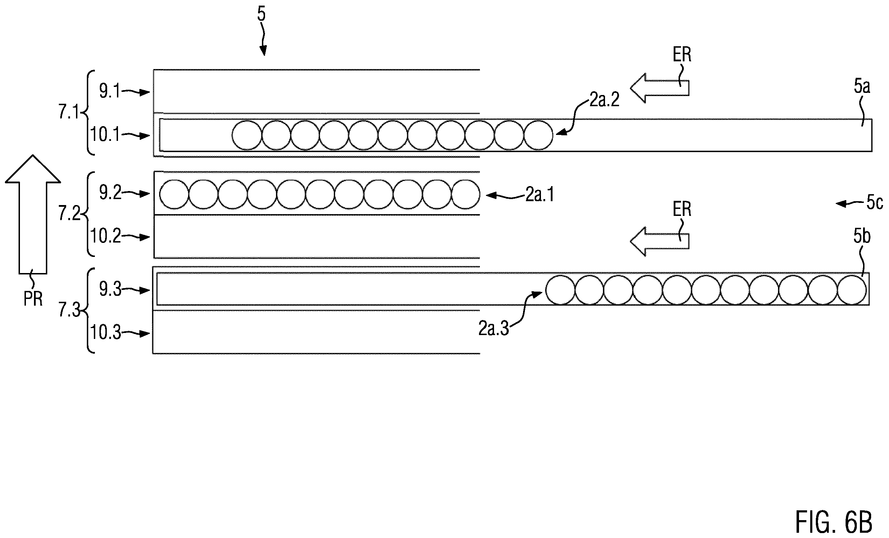

Die Fig. 6B zeigt eine nachfolgende Momentaufnahme des Einspeicherns, nachdem die erste Behältergruppe 2a.1 vollständig vom vorderen Reihenschieber 9.2 des zweiten Shuttles 7.2 aufgenommen wurde und dieses mit beiden Reihenschiebern 9.2, 10.2 in die Lücke / Zwischenposition 5c zwischen dem vorderen und hinteren Einlaufförderband 5a, 5b gefahren wurde. Das zweite Shuttle 7.2 wartet dort vorübergehend bis zur nachfolgenden Bestückung seines hinteren Reihenschiebers 10.2 am vorderen Einlaufförderband 5a.

Demgegenüber ist das erste Shuttle 7.1 mit seinem hinteren Reihenschieber 10.1 noch unverändert über dem vorderen Einlaufförderband 5a positioniert.

Die zweite Behältergruppe 2a.2 ist zum in der Fig. 6B dargestellten Zeitpunkt fast vollständig in den hinteren Reihenschieber 10.1 des ersten Shuttles 7.1 eingelaufen.

Zudem hat das dritte Shuttle 7.3 mittlerweile die zuvor vom zweiten Shuttle 7.2 eingenommene Position erreicht, sodass nun der vordere Reihenschieber 9.3 des dritten Shuttles 7.3 über dem hinteren Einlaufförderband 5b stillstehend positioniert ist. Entsprechend kann dort eine zeitlich unmittelbar an die zweite Behältergruppe 2a.2 anschließende dritte Behältergruppe 2a.3 in Einlaufrichtung ER, also quer zur Pufferrichtung PR, einlaufen.

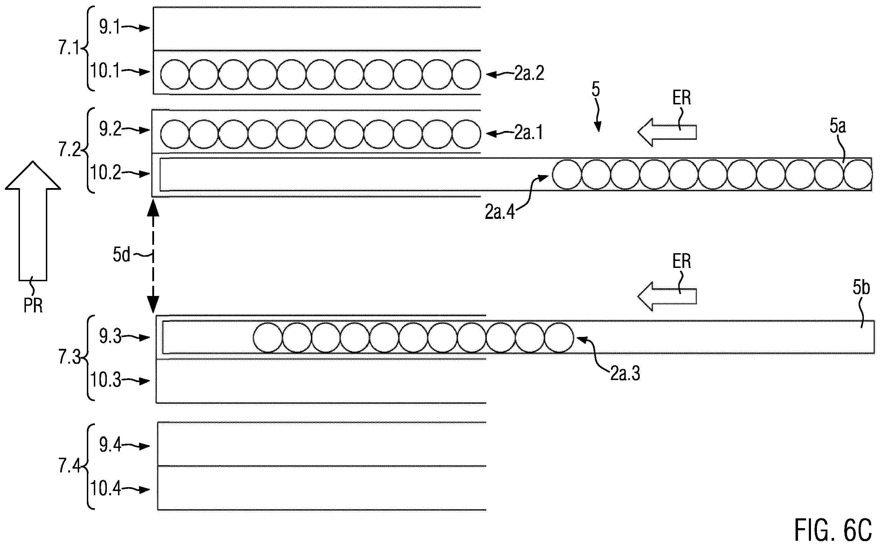

Die Fig. 6C zeigt einen nachfolgenden Zeitpunkt des Einspeicherns, bei dem das erste Shuttle 7.1 den Einlaufbereich 5 verlassen hat und an dessen Stelle das zweite Shuttle 7.2 seinen hinteren und noch leeren Reihenschieber 10.2 über dem vorderen Einlaufförderband 5a positioniert hat. Dabei fährt das zweite Shuttle 7.2 den bereits mit der ersten Behältergruppe 2a.1 gefüllten vorderen Reihenschieber 9.2 über das vordere Einlaufförderband 5a hinaus.

Somit kann eine zeitlich lückenlos nachfolgende vierte Behältergruppe 2a.4 anschließend in den hinteren Reihenschieber 10.2 des zweiten Shuttles 7.2 einlaufen.

Zu erkennen ist in der Fig. 6C ferner, dass beim erstmaligen Einspeichern von Behältern 2, also am dargestellten ersten Shuttle 7.1, der vordere Reihenschieber 9.1 leer bleibt.

Zu dem in der Fig. 6C dargestellten Zeitpunkt ist ferner die dritte Behältergruppe 2a.3 fast vollständig in den vorderen Reihenschieber 9.3 des dritten Shuttles 7.3 eingelaufen, sodass dieses nach vollständigem Einlaufen der dritten Behältergruppe 2a.3 an die Zwischenposition 5c zwischen dem vorderen Einlaufförderband 5a und dem hinteren Einlaufförderband 5b gefahren werden kann, um dort auf die weitere Bestückung mit Behältern 2 zu warten.

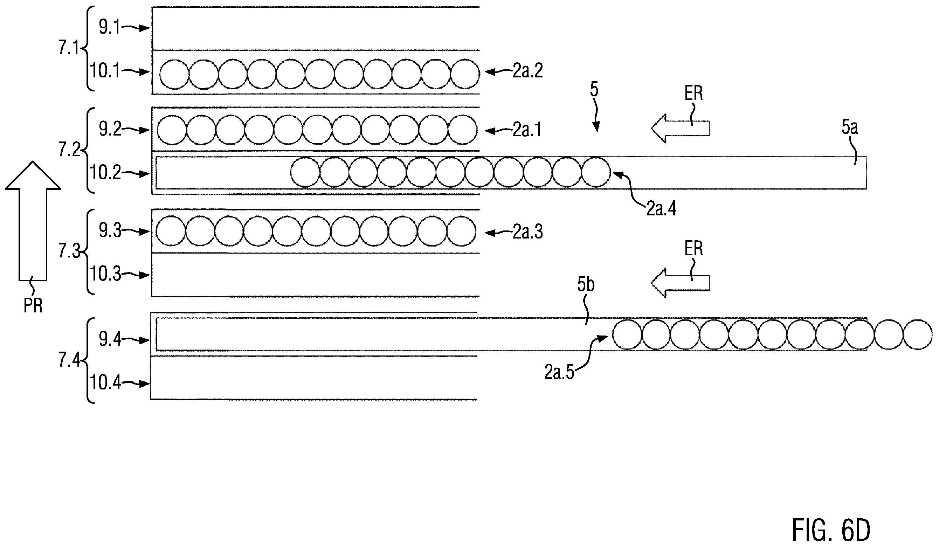

Dieser Zustand ist in der Fig. 6D dargestellt während des Einlaufens der vierten Behältergruppe 2a.4 in den über dem vorderen Einlaufförderband 5a positionierten hinteren Reihenschieber 10.2 des zweiten Shuttles 7.2.

Zu erkennen ist in der Fig. 6D zudem eine auf dem hinteren Einlaufförderband 5b im direkten zeitlichen Anschluss an die vierte Behältergruppe 2a.4 einlaufende fünfte Behältergruppe 2a.5.

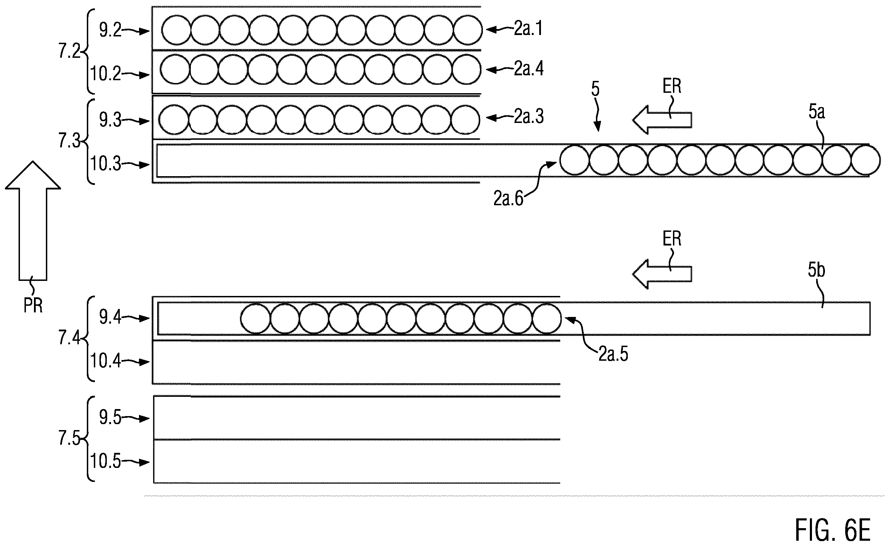

In der Fig. 6E ist ein Zeitpunkt dargestellt, nachdem sich das erste Shuttle 7.1 mit seinem bestückten hinteren Reihenschieber 10.1 und unbestückten vorderen Reihenschieber 9.1 in der Pufferrichtung PR aus dem dargestellten Bereich herausbewegt hat. Entsprechend befindet sich an der vordersten dargestellten Position mittlerweile das zweite Shuttle 7.2 mit den von ihm aufgenommenen Behältergruppen 2a.1 und 2a.4.

Währenddessen läuft die fünfte Behältergruppe 2a.5 in den vorderen Reihenschieber 9.4 des vierten Shuttles 7.4 ein. In zeitlich direktem Anschluss läuft auf dem vorderen Einlaufförderband 5a eine sechste Behältergruppe 2a.6 ein, wobei das dritte Shuttle 7.3 mittlerweile aus der Zwischenposition 5c in den Bereich des vorderen Einlaufförderbands 5a bewegt wurde, sodass sich dort nun der hintere Reihenschieber 10.3 des dritten Shuttles 7.3 befindet.

Dargestellt ist der Vollständigkeit halber ferner ein zum hinteren Einlaufförderband 5b nachrückendes fünftes Shuttle 7.5 mit zugehörigen Reihenschiebern 9.5, 10.5.

Der in den Fig. 6C bis 6E dargestellte Ablauf wiederholt sich dann für alle entsprechend in den Einlaufbereich 5 nachrückenden Shuttles 7 beim einreihigen Einspeichern der Behälter 2 / Behältergruppen 2a jeweils in vordere oder hintere Reihenschieber 9, 10.

Damit ist ein zeitlich lückenloses und platzsparendes Einspeichern der einreihig einlaufenden Behälter 2 / Behältergruppen 2a für deren jeweils einreihige Pufferung in Pufferrichtung PR, also ohne Staudruck, möglich.

Am Ende der Einlaufförderbänder 5a, 5b kann ein Anschlag 5d für die Behälter 2 / Behältergruppen 2a ausgebildet sein, sodass diese lückenlos bis zum stirnseitigen Ende der Führungskanäle 9c, 10c in die Reihenschieber 9, 10 einlaufen und dort anschlagen. Dies ist in der Fig. 6D schematisch angedeutet und in der Fig. 1 für ein einziges Einlaufförderband 5a dargestellt.

Stattdessen könnten die Reihenschieber 9, 10 an deren stirnseitigen Enden entsprechende Anschläge (nicht dargestellt) aufweisen, die beispielsweise zum Ausspeichern automatisch hochgeklappt werden könnten.

Zudem ist ein stirnseitiger Anschlag der Behälter 2 entbehrlich, wenn das Einlaufförderband 5a, 5b bei vollständig in den jeweiligen Reihenschieber 9, 10 eingelaufener Behältergruppe 2a gezielt angehalten wird.

Mit der beschriebenen Vorrichtung 1 und dem beschriebenen Verfahren lassen sich die folgenden Vorteile erzielen:
Die Behälter 2 können drucklos eingespeichert, auf der Pufferfläche 3 in einreihiger Gruppierung verschoben und so auch wieder ausgespeichert werden.

Hierbei kann ein zeitlich lückenloser Anschluss von Behältergruppen 2a aneinander sowohl beim Einspeichern als auch beim Verschieben und Ausspeichern eingehalten werden. Dies ist zudem auf flexible Weise mit unterschiedlichen Behälterformaten möglich, beispielsweise mit Behälterdurchmessern von 40 bis 150 mm.

Die Länge der Behältergruppen 2a pro Reihenschieber 9, 10 kann beispielsweise je nach Masse der einzelnen Behälter 2 flexibel an die Leistungsfähigkeit der Shuttles 7 hinsichtlich der maximal zulässigen Massenträgheit für eine optimale Auslastung der Vorrichtung 1 angepasst werden. Beispielsweise sind einreihige Behältergruppen 2a mit einer Länge von 4 bis 5,5 Metern für ein effizientes Puffern der Behälter 2 / Behältergruppen 2a besonders vorteilhaft (maximal entsprechend der Breite der Reihenschieber 9, 10).

Die Behälter / Behältergruppen 2a werden vorzugsweise als lückenloser Behälterstrom zur Vorrichtung 1 transportiert. Dies ist auf prinzipiell bekannte Weise durch Verkettung mehrerer unabhängig voneinander mit variabler Geschwindigkeit angetriebener Förderbänder und dazwischenliegenden Überschüben möglich (nicht dargestellt).

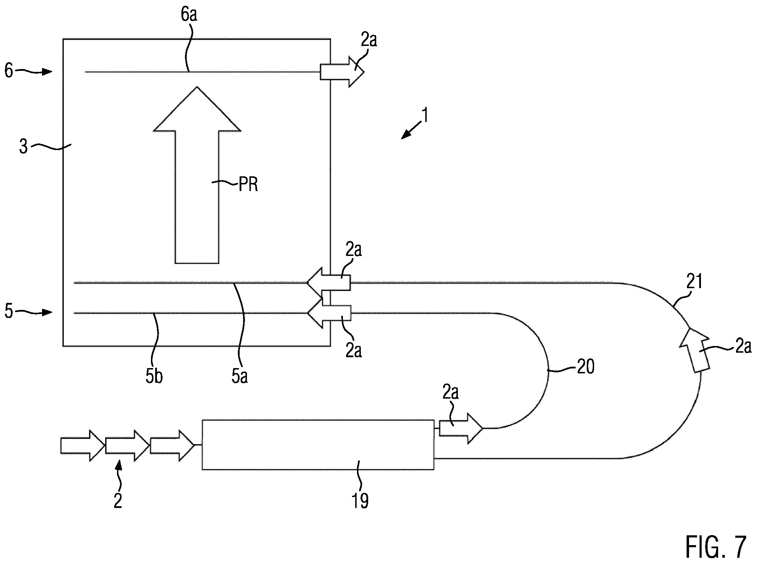

Die Vorrichtung 1 kann dem Einlaufbereich 5 vorgelagert eine (in der Fig. 7 in anderem Zusammenhang schematisch angedeutete) Weiche 19 umfassen, um den lückenlos einlaufenden Behälterstrom auf die Behältergruppen 2a aufzuteilen, insbesondere zu deren Verteilung in zeitlich lückenloser Abfolge auf die Einlaufförderbänder 5a, 5b.

Zusätzlich könnten die einzelnen Einlaufförderbänder 5a, 5b derart unabhängig voneinander angetrieben sein, dass der zeitliche Ablauf der auf den einzelnen Einlaufförderbändern 5a, 5b einlaufenden Behälter 2 / Behältergruppen 2a mit dem Vorschub der Shuttles 7 im Einlaufbereich 5 synchronisiert oder anderweitig korrigiert werden kann.

Prinzipiell wäre auch eine hinsichtlich des Einspeicherns alternative Ausführungsform der Vorrichtung 1 / des Verfahrens denkbar, wobei dann mehrere Reihenschieber 9, 10 gleichzeitig oder zumindest zeitlich überlappend mit Behältern 2 / Behältergruppen 2a bestückt werden könnten. Dies ist beispielhaft und schematisch in der Fig. 7 angedeutet.

Demnach könnten die zwischen der Weiche 19 und dem Einlaufbereich 5 jeweils parallel geschalteten Transportstrecken 20, 21 unterschiedlich lang sein und/oder mit unterschiedlicher Transportgeschwindigkeit betrieben werden, sodass die an der Weiche 19 laufend abwechselnd auf die Transportstrecken 20, 21 verteilten Behältergruppen 2a derart unterschiedlich lange zwischen der Weiche 19 und dem Einlaufbereich 5 unterwegs sind, dass sie dort schließlich gleichzeitig ankommen und in die wartenden Reihenschieber 9, 10 einlaufen. Das heißt, die jeweils zuerst aus dem kontinuierlichen und lückenlosen Behälterstrom abgetrennte Behältergruppe 2a durchläuft dann die kürzere Transportstrecke 20 und eine unmittelbar danach aus dem Behälterstrom abgetrennte Behältergruppe 2a durchläuft dann die entsprechend längere Transportstrecke 21.

Dies wäre prinzipiell auch mit einer größeren Anzahl von Transportstrecken 20, 21 möglich, beispielsweise mit vier derart unterschiedlich langen Transportstrecken (nicht dargestellt), die dann ebenso derart ausgelegt sind, dass die nacheinander vom zulaufenden Behälterstrom abgetrennten Behältergruppen 2a gleichzeitig im Einlaufbereich 5 ankommen und in die dort wartenden Reihenschieber 9, 10 einlaufen.

Vorteilhaft ist bei der Vorrichtung 1 ferner, dass die Pufferfläche 3 und das zugehörige Transportsystem 4 modular aufgebaut werden können und die Pufferkapazität beispielsweise durch Vergrößerung oder Verkleinerung in Pufferrichtung PR gegebenenfalls auch nachträglich angepasst werden kann.

Zudem ermöglichen die beschriebene Vorrichtung 1 und das beschriebene Verfahren eine Pufferung einreihig gruppierter Behälter 2 bei vergleichsweisen hohen Maschinenleistungen von beispielsweise 60.000 Behälter 2 pro Stunde. Im kontinuierlichen Anlagenbetrieb beträgt die Pufferkapazität dann beispielsweise bis zu einer Minute.

Im Auslaufbereich 6 wird das wenigstens eine Auslaufband 6a intermittierend angetrieben, um einzelne Behälter 2 / Behältergruppen 2a gezielt auf bestimmte Transportgassen 6b zu verteilen. Hierbei kann der Eingang zu einzelnen Transportgassen 6b auch gezielt blockiert werden, um ein unerwünschtes Ausspeichern von Behältern 2 / Behältergruppen 2a in bestimmte Transportgassen 6b zu verhindern. Derartige Abläufe könnten beispielsweise von der Steuereinheit 17 mit dem Antrieb der Shuttles 7 synchronisiert werden. Dies gilt prinzipiell ebenso für das Einspeichern am wenigstens einen Einlaufförderband 5a, 5b.

An das wenigstens eine Auslaufförderband 6a können sich einzeln steuerbare Förderbänder anschließen, um gewünschte zeitliche Abläufe der ausgespeicherten Behälter 2 / Behältergruppen 2a für deren nachfolgenden Verarbeitung, beispielsweise in einer anschließenden Verpackungsmaschine, zu erzeugen. Die Synchronisierung unterschiedlicher Förderbänder und deren Anpassung hinsichtlich der Transportgeschwindigkeit ist prinzipiell bekannt und daher in diesem Zusammenhang nicht im Detail erläutert.

Der Auslaufbereich 6 kann beispielsweise so ausgebildet sein, dass die Behälter 2 / Behältergruppen 2a aus mehreren Reihenschiebern 9, 10 nacheinander und/oder parallel auslaufen und dabei auf beispielsweise drei bis zwölf nebeneinanderliegende Transportgassen 6b verteilt werden.

Dargestellt wurde die Vorrichtung 1 in einer sogenannten Z-Aufstellung, also mit entgegengesetzten orthogonalen Richtungswechseln aus der Einlaufrichtung ER in die Pufferrichtung PR und aus dieser in die Auslaufrichtung AR, sodass die Einlaufrichtung ER der Behälter 2 / Behältergruppen 2a im Einlaufbereich 5 und die Auslaufrichtung AR der Behälter 2 / Behältergruppen 2a im Auslaufbereich 6 identisch sind.

Denkbar ist aber auch eine sogenannte U-Aufstellung, also mit gleichgerichteten orthogonalen Richtungswechseln in die Pufferrichtung PR und aus dieser heraus, sodass die Einlaufrichtung ER der Behälter 2 / Behältergruppen 2a im Einlaufbereich 5 und die Auslaufrichtung AR der Behälter 2 / Behältergruppen 2a im Auslaufbereich 6 einander entgegengesetzt sind. Dies ist in der Fig. 7 lediglich beispielhaft angedeutet.

Hierzu wäre im Wesentlichen nur die Laufrichtung des wenigstens einen Auslaufförderbands 6a umzukehren und daran anschließende Einrichtungen zur Verteilung der Behälter 2 / Behältergruppen 2a auf die Transportgassen 6b, beispielsweise Auslaufsperren zu einzelnen Transportgassen 6b, entsprechend anzuordnen.

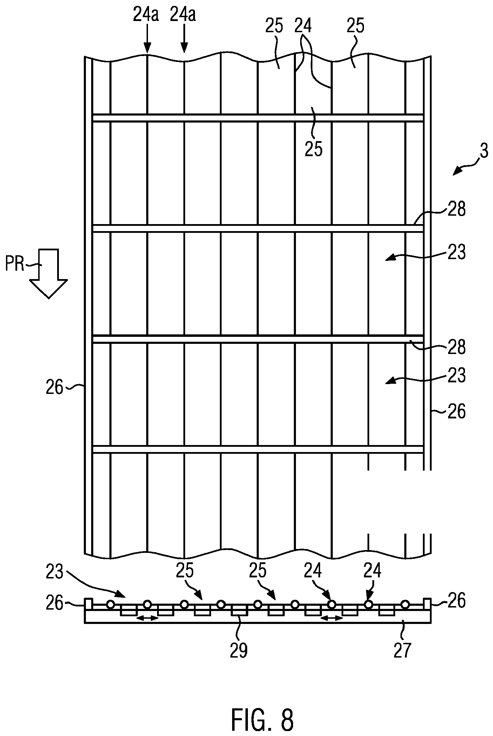

Die Fig. 8 zeigt schematisch in der Draufsicht und im Querschnitt eine bevorzugte Ausgestaltung der Pufferfläche 3. Demnach kann diese von Mattenketten 23 ausgebildet sein oder solche umfassen. Die Mattenketten 23 umfassen jeweils quer zur Pufferrichtung PR an Gelenken 24 aneinandergereihte Kettenglieder 25. Das heißt, die Gelenkachsen 24a der einzelnen Gelenke 24 sind im Wesentlichen in der Pufferrichtung PR ausgerichtet.

Die Mattenketten 23 dienen als stationäre Schiebefläche und sind daher im normalen Pufferbetrieb zum Verschieben der Behälter 2 in Pufferrichtung PR nicht angetrieben.

Zusätzlich könnten die Mattenketten 23 quer zur Pufferrichtung PR angetriebene Abschnitte ausweisen, um die Behälter 2 auf der Pufferfläche 3 innerhalb der Reihenschieber 9, 10 quer zur Pufferrichtung PR zu verschieben, beispielsweise um Lücken zwischen den Behältern 2 zu schließen.

Die Kettenglieder 25 der Mattenketten 23 bestehen vorzugsweise aus Kunststoff. Dies ermöglicht niedrige Reibwerte mit den meisten gebräuchlichen Behältern 2.

Die Gelenke 24 können gegenüber dem restlichen Kettenkörper der Mattenketten 23 erhaben ausgebildet sein.

Die Ausrichtung der Mattenketten 23 quer zur Pufferrichtung PR bietet den Vorteil, dass die Behälter 2 dann nicht über die Gelenke 24 geschoben werden, sondern entlang der Gelenke 24 verschoben werden. Somit kann ein unerwünschtes Aufschwingen der Behälter 2 beim Verschieben und ein sogenannter Stick-Slip-Effekt vermieden werden.

Die Mattenketten 23 werden an ihren einander benachbarten Längsseiten und an ihren äußeren Enden am seitlichen Rand der Pufferfläche 3 an Leisten 26 oder dergleichen befestigt. Die Mattenketten 23 können lose auf einem Untergestell 27 liegen, was bei herkömmlichen Transporteuren üblich ist.

Die Länge der einzelnen Mattenketten 23 (quer zur Pufferrichtung PR) entspricht vorzugsweise der Breite 3a der Pufferfläche 3. Dies ermöglicht eine Vorinstallation der Mattenketten 23 im Sinne einer modular aufgebauten Pufferfläche 3.

Vorzugsweise sind zwischen den Mattenketten 23 quer zur Pufferrichtung PR ausgerichtete Führungsleisten 28 ausgebildet, die in Pufferrichtung PR auf die Mattenketten 23 übertragenen Schubkräfte aufnehmen. Die Führungsleisten 28 verlaufen dann vorzugsweise ebenso über die gesamte Breite 3a der Pufferfläche 3. Die Führungsleisten 28 bestehen vorzugsweise aus Kunststoff.

Die Mattenketten 23 können nach unten weisende Stege 29 oder dergleichen Vorsprünge zur Verankerung in Pufferrichtung PR auf dem Untergestell 27 umfassen, um Schubkräfte von den Kettengliedern 25 an das Untergestell 27 abzuleiten. Die Stege 29 können sich dann quer zur Pufferrichtung PR bezüglich des Untergestells bewegen.

Die Mattenketten 23 sind vorzugsweise nur an ihren äußeren Enden, also am Rand der Pufferfläche 3, befestigt und werden dabei nicht gespannt. Somit können die Kettenglieder 25 Längenveränderungen, beispielsweise aufgrund von Temperaturschwankungen, im Pufferbetrieb ausgleichen. Darin liegt ein wesentlicher Vorteil der Mattenketten 23 gegenüber einer aus Platten gebildeten Pufferfläche 3.

Geeignete Mattenketten 23 sind mit unterschiedlichen Oberflächenstrukturen erhältlich und können im Sinne einer Reibflächenpaarung gezielt an die Behälter 2 angepasst werden. Das heißt, die Mattenketten 23 können für voraussichtlich zu puffernde Typen von Behältern 2 gezielt ausgelegt werden.

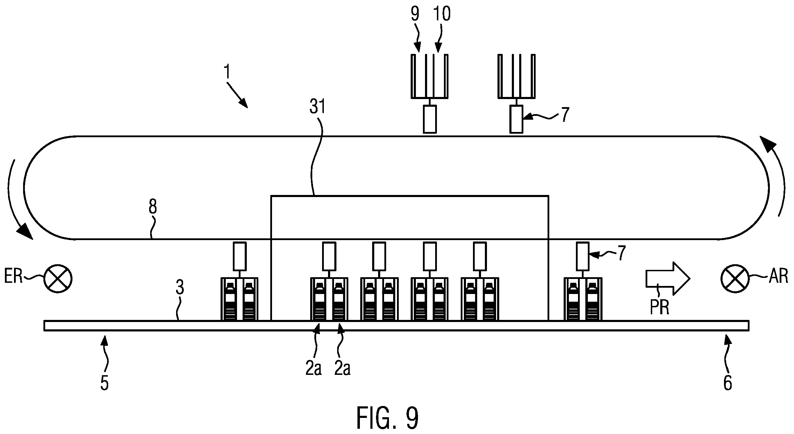

Die Fig. 9 verdeutlicht in einer schematischen seitlichen Ansicht der Vorrichtung 1, dass diese im Bereich der Pufferfläche 3 wenigstens eine integrierte Behandlungseinheit 31 umfassen kann. Die Behandlungseinheit 31 kann beispielsweise ein Kühltunnel für einen anschließenden digitalen Direktdruck auf die Behälter 2 sein.

Die Behälter 2 können kann auch im Abstand (quer zur Pufferrichtung PR) zueinander im jeweiligen Reihenschieber 9, 10 angeordnet und so durch die Behandlungseinheit 31 geschoben werden. Die Reihenschieber 9, 10 können die Behälter 2 gegebenenfalls an vorgegebenen und bei der Behandlung gleichbleibenden Wandbereichen berühren und schieben.

Somit sind mit der Vorrichtung 1 sowohl das Einspeichern und Ausspeichern als auch dazwischen ein Transfer der Behälter 2 über eine Prozessstrecke der Behandlungseinheit 31 und ein dynamisches Puffern der Behälter 2 möglich.

Die Übergabe der Behälter 2 auf stromabwärts der Vorrichtung 1 nachfolgende Behandlungseinheiten ist dann chargenweise möglich. Das heißt, die Prozesszeiten für die Behälter 2 / Behältergruppen 2a können chargenweise in der Vorrichtung 1 angepasst werden. Dies wird durch den voneinander unabhängig gesteuerten Antrieb der Shuttles 7 ermöglicht, so dass die Behälter 2 chargenweise und je nach Bedarf schneller oder langsamer durch die Behandlungseinheit 31 gefahren werden können. Durch eine Kombination aus dynamischem Puffer und wenigstens einer Behandlungseinheit 31 in der Vorrichtung 1 kann unmittelbar auf Änderungen der Produktivität einer übergeordneten Behälterbehandlungsanlage / Abfüllanlage reagiert werden.

Die beschriebene Vorrichtung 1 lässt sich platzsparend einhausen und/oder mit an sich bekannten Überwachungssystemen ausrüsten, um die Integrität der in die Reihenschieber 9,10 eingelaufenen Behältergruppen 2a zu überwachen. Beispielsweise könnte die Vollständigkeit und/oder Lage der Behältergruppen 2a in den Reihenschiebern 9, 10 überwacht werden. Zu diesem Zweck könnten Wiegeeinrichtungen in die Pufferfläche 3 integriert werden. Ebenso könnten die Behältergruppen 2a beim Einspeichern und/oder Ausspeichern optisch überwacht werden.

Bei Einhausung der Vorrichtung 1 kann die Einstellstation 13 so angeordnet werden, dass diese von außerhalb der Einhausung (nicht dargestellt) bedient werden kann, um beispielsweise ein gefahrloses manuelles Verstellen der lichten Weite 11 zu ermöglichen.

Ferner kann die Steuereinheit 17 so ausgelegt werden, dass die Shuttles 7 bei einem Not-Halt definierte Positionen anfahren dort verbleiben, bevor der Zugang in das Innere der Einhausung für Personal freigegeben wird.

## Patentansprüche

1. Verfahren zum Puffern einreihig gruppierter Behälter (2) in einer Abfüllanlage, wobei die Behälter auf wenigstens einem Einlaufförderband (5a, 5b) in Einlaufrichtung (ER) eingespeichert werden, auf einer quer daran anschließenden Pufferfläche (3) von schienengeführten und einzeln angetriebenen Shuttles (7) mit Reihenschiebern (9, 10) in einer zur Einlaufrichtung quer verlaufenden Pufferrichtung (PR) einreihig verschoben werden und auf wenigstens einem in Pufferrichtung quer daran anschließenden Auslaufförderband (6a) ausgespeichert werden, **dadurch gekennzeichnet, dass** die Reihenschieber die Behälter jeweils einreihig in einem von einer in Pufferrichtung vorauslaufenden vorderen Reihenführung (9a, 10a) und von einer nachlaufenden hinteren Reihenführung (10a, 10b) gebildeten Führungskanal (9c, 10c) aufnehmen.

2. Verfahren nach Anspruch 1, wobei eine lichte Weite (11) zwischen der vorderen und hinteren Reihenführung (9a, 10a, 9b, 10b) jeweils an eine Breite / einen Durchmesser (2b, 2c) der Behälter (2) insbesondere in einem Bereich von 40 bis 150 mm angepasst wird.

3. Verfahren nach einem der vorigen Ansprüche, wobei die Shuttles (7) die Reihenschieber (9, 10) zum einreihigen Aufnehmen der Behälter (2) jeweils über einem zugeordneten Einlaufförderband (5a, 5b) positionieren und die Behälter zwischen vorderer und hinterer Reihenführung (9a, 9b, 10a, 10b) auf dem Einlaufförderband stehend in den Führungskanal (9c, 10c) einlaufen.

4. Verfahren nach einem der vorigen Ansprüche, wobei die Reihenschieber (9, 10) an den Shuttles (7) paarweise verschoben werden und insbesondere von durchgehenden Schienen (8) paarweise umlaufend geführt werden.

5. Verfahren nach Anspruch 3 und 4, wobei den in Pufferrichtung (PR) jeweils vorderen Reihenschiebern (9) ein in Pufferrichtung hinteres Einlaufförderband (5b) und den jeweils hinteren Reihenschiebern (10) ein in Pufferrichtung vorderes Einlaufförderband (5a) fest zugeordnet werden.

6. Verfahren nach wenigstens einem der vorigen Ansprüche, wobei die insbesondere lückenlos zugeführten Behälter (2) in einreihige Behältergruppen (2a) unterteilt werden und diese abwechselnd auf die, insbesondere die beiden, in Pufferrichtung (PR) nacheinander angeordneten Einlaufförderbänder (5a, 5b) geleitet werden.

7. Verfahren nach wenigstens einem der vorigen Ansprüche, wobei die Shuttles (7) beim Anfahren der Einlaufförderbänder (5a, 5b) und/oder beim Überfahren unbesetzter Pufferbereiche (3b) der Pufferfläche (3) eine Geschwindigkeit (V2) von wenigstens 0,4 m/s erreichen.

8. Verfahren nach wenigstens einem der vorigen Ansprüche, wobei die Behälter (2) beim Ausspeichern einreihig auf 3 bis 12 Transportgassen (6b) verteilt werden, wobei jeder Transportgasse insbesondere ein separat steuerbares Auslaufförderband (6a) zugeordnet ist.

9. Verfahren nach wenigstens einem der vorigen Ansprüche, wobei die Behälter (2) ferner in einer im Bereich der Pufferfläche (3) angeordneten Behandlungseinheit (31) behandelt und die dortige Aufenthaltsdauer der Behälter durch Vorschub und/oder Anhalten der Shuttles (7) mit den die Behälter dabei aufnehmenden Reihenschiebern (9, 10) eingestellt wird.

10. Vorrichtung (1) zum Puffern einreihig gruppierter Behälter (2) in einer Abfüllanlage, umfassend eine Pufferfläche (3) und ein darüber angeordnetes Transportsystem (4) zum Verschieben der Behälter auf der Pufferfläche von einem Einlaufbereich (5) mit wenigstens einem quer zur Pufferrichtung (PR) verlaufenden Einlaufförderband (5a, 5b) in einen Auslaufbereich (6) mit wenigstens einem quer zur Pufferrichtung verlaufenden Auslaufförderband (6a), wobei das Transportsystem an Schienen (8) geführte und unabhängig voneinander angetriebene Shuttles (7) mit quer zur Pufferrichtung ausgerichteten Reihenschiebern (9, 10) zum einreihigen Verschieben der Behälter umfasst, **dadurch gekennzeichnet, dass** die Reihenschieber jeweils einen quer zur Pufferrichtung verlaufenden Führungskanal (9c, 10c) zur einreihigen Aufnahme der Behälter umfassen, wobei der Führungskanal von einer den Behältern vorauslaufenden vorderen Reihenführung (9a, 10a) und einer den Behältern nachlaufenden hinteren Reihenführung (9b, 10b) begrenzt wird.

11. Vorrichtung nach Anspruch 10, wobei die Shuttles (7) Stellmechanismen (12) zum Einstellen einer lichten Weite (11) zwischen der vorderen und hinteren Reihenführung (9a, 10a, 9b, 10b) umfassen, insbesondere einer lichten Weite von 40 bis 150 mm.

12. Vorrichtung nach Anspruch 10 oder 11, wobei das Transportsystem (4) eine stationäre Einstellstation (13) zur automatischen Betätigung der Stellmechanismen (12) umfasst.

13. Vorrichtung nach wenigstens einem der Ansprüche 10 bis 12, wobei die Reihenschieber (9, 10) eine Breite von 3 bis 6 m, insbesondere von 4 bis 5,5 m, quer zur Pufferrichtung (PR) aufweisen.

14. Vorrichtung nach wenigstens einem der Ansprüche 10 bis 13, wobei jedes Shuttle (7) zwei in Pufferrichtung (PR) hintereinander angeordnete Reihenschieber (9, 10) umfasst.

15. Vorrichtung nach wenigstens einem der Ansprüche 10 bis 14, wobei der Einlaufbereich (5) mehrere, insbesondere zwei, in Pufferrichtung (PR) hintereinander angeordnete Einlaufförderbänder (5a, 5b) umfasst.

16. Vorrichtung nach einem der Ansprüche 10 bis 15, ferner mit einer Weiche (19) zur Unterteilung eines insbesondere lückenlosen Stroms mit den Behältern (2) in einreihige Behältergruppen (2a) und deren abwechselnde und insbesondere zeitlich lückenlose Zuteilung zu den Einlaufförderbändern (5a, 5b).

17. Vorrichtung nach Anspruch 16, ferner mit unterschiedlich langen und/oder schnellen Transportstrecken (20, 21) zwischen der Weiche (19) und den Einlaufförderbändern (5a, 5b), wobei die Länge der einzelnen Transportstrecken so voneinander abweichen und/oder deren Transportgeschwindigkeit so unterschiedlich eingestellt werden kann, dass den Transportstrecken an der Weiche nacheinander zugeteilte Behältergruppen (2a) im Wesentlichen gleichzeitig auf den Einlaufförderbändern einlaufen.

18. Vorrichtung nach wenigstens einem der Ansprüche 10 bis 17, wobei an wenigstens einem der Reihenschieber (9, 10) wenigstens ein Reinigungselement (16) zum Anblasen, Ansprühen, Abziehen und/oder Abbürsten der Pufferfläche (3) angeordnet ist.

19. Vorrichtung nach wenigstens einem der Ansprüche 10 bis 18, wobei die Pufferfläche (3) quer zur Pufferrichtung (PR) verlaufende und stationär angeordnete Mattenketten (23) umfasst.
